# EUROPEAN PATENT SPECIFICATION

(11) **EP 0 731 774 B1**
(45) Date of publication and mention of the grant of the patent: **05.04.2000**
(21) Application number: 95902852.3
(22) Date of filing: 29.11.1994
(51) Int. Cl.: C01B 15/10, C11D 3/39, C11D 17/00

(54) **PROCESS FOR STABILISING PARTICULATE ALKALI METAL PERCARBONATE**
VERFAHREN ZUR STABILISIERUNG VON ALKALIMETALLPERCARBONAT
PROCEDE DE STABILISATION DE PERCARBONATE DE METAL ALCALIN PARTICULAIRE

(30) Priority: 01.12.1993 GB 9324625
(43) Date of publication of application: 18.09.1996
(73) Proprietor: SOLVAY INTEROX LIMITED, Warrington, Cheshire WA4 6HB (GB)
(72) Inventor: HORNE, Graham, Robert, Warrington Cheshire WA5 3JN (GB); JAMES, Alun, Pryce, Liverpool L23 8SW (GB)
(74) Representative: Vande Gucht, Anne
(86) International application number: GB9402603
(87) International publication number: WO9515292

(56) References cited:
- EP-A- 0 405 797
- EP-A- 0 459 625
- EP-A- 0 567 140
- GB-A- 1 575 792
- P.PASCAL 'Nouveau Traité de Chimie Minérale, Tome VI' 1961 , MASSON ET CIE , PARIS, FRANCE see page 180 - page 184
- : "Supplement to Mellor's comprehensive treatise on inorganic and theoretical chemistry, volume V, Boron" , , LONGMAN, LONDON
- R. GRANT: "Grant and Hackh's chemical dictionary, page 561" , , MCGRAW-HILL, NEW YORK
- D. M. CONSIDINE: "Chemical and process technology encyclopedia, page 992" , , MCGRAW-HILL, NEW YORK

## Description

The present invention relates to a process for stabilising particulate alkali metal percarbonate, and particularly to a coating process therefor, to the particulate percarbonate having improved stability so produced and to washing or bleaching compositions containing the same.

It is well known that alkali metal percarbonates, including sodium percarbonate in particular, can be used as bleaching compounds in detergent powder mixtures, eg for domestic clothes washing. In comparison with alkali metal perborate tetrahydrate, they have the advantage of dissolving more rapidly at 20°C, which is becoming increasily beneficial in view of the trend towards lower washing temperatures. Another advantage of percarbonates is that they are environmentally friendly. However, percarbonates have a known disadvantage of decomposing more quickly than sodium perborate tetrahydrate during storage in the powdered state, particularly if stored in a damp atmosphere. Moreover, other constituents of washing compositions can accelerate their decomposition.

In order to improve the stability of percarbonates, and particularly sodium percarbonate, it has been proposed to bring the percarbonate particles into contact with various stabilising materials, of which one favoured method comprises coating the percarbonate with those materials. Organic and/or polymer compounds such as paraffins, polyols, vinyl resins etc. and inorganic compounds such as silicates, borates, perborates, boric acids and carbonates etc. have been proposed as coating materials.

The desirablity of coating percarbonate for use in washing compositions has become of greater significance in more recent years on account of the trend in the detergent industry to contemplate the use of percarbonate in detergent compositions containing more aggressive components such as aluminosilicate (zeolite) builders, the effects of which are typically countered by applying higher amounts of coating agent.

In British patent 1 575 792, to Interox SA there is described a process for stabilising sodium percarbonate by coating it with a solution of a boric acid. We have found that coating percarbonate with boric acid can be very effective method of stabilisation, possibly due to the ability of boric acid to spread over the surface of the percarbonate, but that practical use of the process is hindered by the somewhat limited solubility of boric acids in water, particularly at ambient temperatures. In consequence, it is necessary to use volumes of coating solution that are rather larger than we would prefer to use. Comparatively low concentrations of coating agent are disadvantageous for industrial use, because the thermal energy needed to dry the percarbonate particles after coating is proportionate to the volume of water to be evaporated away, thereby increasing the drying costs, and the prolonged drying periods can cause percarbonate decomposition, reducing the value of the eventual product.

One alternative method of applying boric acid that would circumvent difficulties with its solubility comprises applying the agent in particulate form to damp percarbonate such as "wet cake", and thereafter drying the resultant product. However, this solid mix/drying method suffers from two objections. First, it was observed to cause excessive agglomeration of the percarbonate particles. Secondly it restricts the flexibility of the user to employ a combination of coating agents in a single step, in that many other coating agents are not readily susceptible to application by this method.

In European Patent Specification 459625A, it is recognised that there can be problems with coating sodium percarbonate particles with boric acid and another coating agent in the same solution, so that the coating method suggested therein comprises the separate introduction of the two agents, boric acid and sodium silicate in separate solutions. This does not address the difficulty of inherent low aqueous solubility of boric acids, and indeed increases solvent removal difficulties by inevitably adding extra water in the second solution. Moreover, separate introduction of two coating agents renders the coating process more complex and introduces a greater risk of non-homogeneity of the coating.

In European Patent Specification 431747A, there is described a liquid formulation comprising a suspended particulate oxidant in an aqueous medium that contains an alkali metal chloride, alkali metal borate, boric acid or mixture thereof, in order it is believed to desolubilise the particulate oxidant, of which sodium perborate mono and tetrahydrate are exemplified. Such teaching provides no pointer as to how to ameliorate or overcome the aforementioned disadvantages in coating processes for an alkali metal percarbonate.

EP-A-567140 describes treating sodium percarbonate with at least one coating agent selected from the group (A) consisteing of boric acids, borates, and alkali metal silicates, and at least one coating agent from the group (B) consisting of carbonates, hydrogencarbonates and sulphates and at least one coating agent belonging to groups (A) and (B) being in the form of an aqueous slurry. P Pascal, Nouveau Traite de Chimie Minérale, Tome VI, gives the solubility of boric acid in the presence of a number of alkali and alkaline earth metal halide salts.

It is an object of the present invention to provide a process for stabilising percarbonate particles which ameliorates or overcomes at least some of the disadvantages of the above-mentioned processes and/or provides an alternative to the above-described processes.

The present invention provides a process for stabilising a particulate alkali metal percarbonate by coating it with an effective amount of a boric acid-containing coating material in aqueous solution and dewatering the coated percarbonate characterised in that the aqueous solution comprises a boric acid in the presence of a solubility-enhancing amount of a pH neutral alkali metal or ammonium salt.

Herein by the term effective amount for the boric-acid-containing coating material is meant an amount such that the rate of decomposition of percabonate is reduced, when it is stored in an atmosphere at 80% relative humidity and 40°C in the presence of 10% w/w zeolite 4A. By the term pH neutral salt herein is meant a salt which would not itself significantly increase the pH of as aqueous solution of a boric acid into which it is introduced, that is to say would not produce by itself a pH in excess of 6. By the use of such a pH neutral salt, it will be recognised that the boric acid remains in acid form in solution. It will be further recognised that salts such as alkali metal silicates and phosphates which in practice introduce alkalinity into solution are not included within the term pH neutral salt as used in accordance with the present invention, even though as written the cations/anions are charge balanced.

The presence of the pH neutral alkali metal or ammonium salt provides two benefits. First, such material can enhance the solubility of the boric acid, thereby enabling the same weight of boric acid to be applied as a coating, but using a lower volume of coating solution, and consequentially reducing the amount of water to be removed in a subsequent or simultaneous drying phase. Secondly, since the extent of stabilisation obtained using a coating agent depends partly upon the thickness of the coating, the presence of the pH neutral salt contributes to the thickness of the coating and thereby reduces the amount of boric acid to attain a desired stabilisation effect.

The alkali metal salts employed as co-coating agents in the present invention can be chosen from any alkali metal and are preferably sodium and/or potassium, which together with ammonium comprise three particularly preferred cations, of which sodium is most preferred. Other suitable alkali metals include lithium. At the discretion of the user, a mixture of two or more alkali metal and ammonium cations can be employed, such as sodium and potassium, in any relative mole ratio. In some convenient ratios, a mixture of potassium and sodium salts can be selected in the region of about 1:1 mole ratio which can attain a similar solubility enhancement for boric acids through typically encountered processing temperatures of about 20 to 60°C.

The solubilising salts are often selected from sulphate, nitrate and halide, such as chloride, or mixtures of any two or more thereof. Such mixtures can include sulphate and chloride, in particular, the weight ratio being at the discretion of the user. It will be recognised from the foregoing that the salt mixture can comprise simultaneously a mixture of not only the anions, but also the cations.

Examples of preferred pH neutral salts include sodium chloride, potassium chloride, sodium sulphate and potassium sulphate.

The pH neutral alkali metal or ammonium salt is normally selected in a range of from at least 0.1 to 10 parts w/w per 1 part of boric acid, often in the range of from 0.2 to 5 parts w/w per part of boric acid and in many instances in the range of from about 0.4 to 4 parts w/w per part of boric acid.

The boric acid can be selected from any boric acid and particularly ortho- or meta-boric acid. If desired, the boric acid can be generated by acidification of any alkali metal borate, including sodium metaborate, sodium tetraborate, sodium pentaborate, or sodium octaborate or a mixture of any two or more of said borates and/or any corresponding potassium salt. It will be recognised that if such acidification is carried out in or during the preparation of the coating solution, it will contain both boric acid and pH neutral alkali metal salt, which may, if desired, be augmented with further or different pH neutral salt to attain the weight ratio desired.

In addition to the foregoing essential components, the coating agent may contain a proportion of one or more compounds that are known to ameliorate decomposition of percarbonates when employed as a coating, or possibly as a mixture with percarbonates.. Among such additional components may be contemplated peroxygen stabilisers in an amount of from 0 to about 20% by weight of the overall coating, including particularly chelating agents such as complexing carboxylic acids like EDTA and DTPA, and the corresponding complexing methylene phosphonic acids like EDTMPA and DTPMPA.

The present invention employs a narrow selection of pH neutral salts for practicals reasons. It will be understood that there are other pH neutral salts, ie salts which do not increase the pH of a co-solution thereof with boric acids to above 6, which are not preferable for employment with boric acid in a mixed coating agent. Such salts can be closely related to the salts employed in the present invention and even be listed together with, as equivalent to, or instead of such salts for use in detergent or bleaching compositions. For example alkali and alkaline earth metal sulphates are listed together as alternatives in European Patent Specification 567140A. The present invention is not directed to pH neutral alkaline earth metal salts such as magnesium chloride or sulphate in boric acids coating solutions in that their presence tends to depress further the limited solubility of boric acids in water and/or potentially precipitate relatively insoluble salts on the surface of the percarbonate and thereby retard its dissolution in use. EP-A-567140, accordingly, does not provide any teaching to select a combination of alkali metal salt and boric acid to enhance solubility of the latter. A small fraction of such alkaline earth metal salts may be tolerated in the coating agents solutions of the present invention, such as an amount selected in the range of up to about 1 mole per 5 moles of pH neutral alkali metal or ammonium salt, but only to the extent that the resultant mixture is still on balance solubility enhancing for boric acid.

There are certain classes of pH neutral salt which it is desirable to avoid completely. Salts of many transition or lanthanide metals, such as the respective sulphate or chloride of iron, are capable of enhancing the solubility of boric acid in aqueous solution, but it is desirable that they are excluded from the coating solutions of the present invention by virtue of the potential of such metals to promote percarbonate decomposition.

Sufficient coating agent is employed to provide an effective coating. Although the test given previously herein refers to the storage of a percarbonate/zeolite mixture, it will be recognised that such a test is indicative of the storage stability of coated PCS in for example zeolite-built detergent compositions. The quantity of coating agent used, including both essential components and any optional components, usually represents 0.5 to 20% w/w of the coated percarbonate. Preferably, the quantity is selected in the range of from 1 to 15% w/w and in many instances from 2 to 10% of the coated percarbonate. It is desirable that the proportion of boric acid in the coating agent and the total weight of coating agent be employed in combination that the percarbonate is coated with at least 0.3% w/w boric acid, and it is particularly desirable for the coating agent to provide at least 0.5% boric acid based on the percarbonate. Some coatings preferably provide at least 1 % w/w boric acid. In many suitable coatings, the boric acid provision is up to about 2.5%. As a general indication, when a coating is applied in the same way, the extent to which percarbonate decomposition is ameliorated increases as the thickness of the coat increases, though non-linearly. The selected weight of coating takes into account the manner of coating, the length of the period for which the resultant composition should remain stable and the environment in which the percarbonate will be used, such as the temperature and humidity of storage conditions and the proportion of relatively aggressive washing composition constituents like zeolites.

In some embodiments, the percarbonate particles are coated with a relatively small quantity of coating agent, such as from about 2% w/w to about 6% w/w, which ensures that the percarbonate particles initially can enjoy a high active oxygen content (Avox). In other embodiments, where the percarbonate is intended to be stored in an especially aggressive environment, such as alkaline detergent compositions containing a substantial proportion of aluminosilicate builders for use in hot and humid climates, it can be desirable to increase the total weight of coating to over 7% such as within the range of from about 7% to 12% w/w. The initial Avox of the percarbonate is lowered, but its ability to retain Avox is particularly good.

The dissolution of the boric acid and the pH neutral salt to form the coating solution that is subsequently brought into contact with the percarbonate can take place conveniently at a temperature of from 15 to 95°C, and preferably from 20 to 70°C. In a number of practical embodiments the solution is heated gently, such as to the range of 25 to 50°C either prior to or during the dissolution process. In others, the dissolution is effected in the range of 50 to 70°C. It is often convenient to produce and maintain the coating solution at a temperature at or slightly higher, eg within 10°C, of the temperature at which it is will be brought into contact with the percarbonate. At the discretion of the user, the solutions can contain, if desired, a small amount such as up to about 2% w/w of the solution of a crystallisation inhibitor which reduces the likelihood of premature precipitation of solids from the coating solution should it lose water or cool prior to use. A convenient inhibitor comprises polycarboxylates and their corresponding acids, such as polyacrylic acid, polymethacrylic acid or polyhydroxyacrylic acid or the salt thereof. In such an amount the solution remains acidic.

The order of introduction of the two components to form the coating solution is at the discretion of the user. One convenient order comprises the prior introduction of either all or a fraction of the pH neutral salt, such as over half, before introduction of the boric acid and a second convenient order comprises introducing both the pH neutral salt and the boric acid simultaneously. It is desirable to agitate the coating agent solution during its formation to promote the rate of dissolution and thereafter to inhibit crystallisation. The speed of dissolution of the boric acid can be enhanced by prior milling.

The concentration of coating agent in the solution brought into contact with the percarbonate is desirably at least 10% w/w and advantageously it is possible to produce and use solutions having a concentration of at least 20% w/w. The practical upper limit for the coating agent solution concentration varies taking into account the particular pH neutral salt employed and the temperature of the solution, recognising that sodium salts in these systems tend to show increasing solubility at elevated temperature, whereas potassium salts tend to show decreasing solubility in these systems as the temperature is increased. The concentration is can approach a maximum about 40% depending on the overall conditions and in many instances it is selected in the range of 20 to 35% w/w.

The alkali metal percarbonate is preferably sodium percarbonate. In many of the coated percarbonate products produced according to the present invention, the bulk density of the percarbonate so coated is in the range of from 0.8 to 1.2. The rate of dissolution of percarbonate that has been so coated by a process according to the present invention is often rapid, when determined according to international standard ISO 3123-1976. The time corresponding to a 90% dissolution of the sample of percarbonate coated according to the invention does generally not exceed 2.5 minutes.

The particulate percarbonate that is suitable for coating in any process according to the present invention can have been prepared in any process known as such for making an alkali metal percarbonate, e.g. by the direct method, by fluid bed processes, or the so-called wet processes in which percarbonate is crystallised from a saturated aqueous solutions, often by cooling and/or by addition of an alkali metal salt.

The percarbonate core particles which are coated by a process according to the present invention can incorporate various additives in a wide range of proportions and in accordance with known teachings and/or practice. Such additives include, amongst others, persalt stabilisers, crystal habit modifiers and salting out agents.

Persalt stabilisers can be selected from one or more of alkali metal and alkaline earth metal silicates, alkali metal and alkaline earth phosphates, magnesium compounds such as magnesium sulphate, chloride or oxide, organic complexing carboxylic acids and their salts, such as ethylene diamine tetraacetic acid and/or salt, or diethylenetriaminepentaacetic acid and/or salt and/or organic polyphosphonate complexing agents such as hydroxyethylidenediphosphonate, and alkyleneaminopolymethylenephosphonates, including ethylenediaminetetramethylenephosphonic acid (EDTMPA) and/or a soluble salt thereof, diethylenetriaminepentamethylenephosphonic acid (DTPMPA) and/or a soluble salt thereof, cyclohexane-1,2-diaminetetramethylenephosphonic acid (CDTMPA) and/or a soluble salt thereof.

In some highly desirable embodiments, the process of the present invention is employed to coat sodium percarbonate that has been produced by a manufacturing/stabilising process described either in British Patent Specification No 1 553 505 (A), published in the name of Interox Chemicals Limited or in British Patent Specification No 1 578 062 (A), published in the name of Peroxid-Chemie GmbH, in both of which the percarbonate contains a small amount of up to about 0.5% w/w silicate distributed within its particles and a further small amount of up to about 0.5% of a silicate or silicate derivative on the surface of its particles, as a result of the timing and distribution of the addition of silicate in two stages during the crystallisation and recovery of the particulate percarbonate.

Crystal habit modifiers act on the morphology of the percarbonate crystals and include organic polymeric compounds like polyacrylates and inorganic species such as polyphosphates eg sodium hexametaphosphate.

Salting out agents are used during the crystallisation of the percarbonate from solution in wet processes, and typically are highly water-soluble alkali metal salts, such as sodium chloride, sodium sulphate, and/or sodium hexametaphosphate.

It will be understood that some agents can simultaneously provide a number of different properties, such as stabilisation and crystal habit modification. It will be further recognised that certain of the pH neutral salts employed in the present invention to improve the solubility of boric acid in the coating can be present also within the percarbonate core as a result of, for example, salting out operations.

The average diameter of the percarbonate core particles that can be coated by a process according to the present invention is generally at least 100µm and often not greater than 2000 µm, and in many instances, the average particle size falls in the range of 250 to 1000 µm, such as commercially available percarbonate having an average particle size of about 500 µm or about 550 µm.

The spread of percarbonate particles is at the discretion of the percarbonate producer. As a practical matter, and as has been realised for many years, it is advantageous for incorporation in particulate detergent compositions to avoid very fine particles, sometimes referred to as fines, such as particles of below about 100 or 150 µm, because such particles are inherently more susceptible to environment-induced decomposition - they present a much higher surface area to volume ratio than larger particles. For many particulate detergent compositions, it is also desirable to avoid or minimise particles larger than about 1500 µm, to reduce potential problems of persalt/detergent particle segregation and to avoid excessively slow dissolutions rates. Thus, in many practical embodiments of the present invention all or substantially all the percarbonate to be coated can pass through a sieve of 1500 µm and be retained on a sieve of 150 µm, and in some of which or other embodiments at least 80% w/w is retained on a sieve of 350 µm and passes through a sieve of 1000 µm.

The process according to the present invention by which percarbonate particles are coated with the coating agent described above can comprise any method known in itself for contacting persalts with coating agent solution. A preferred means for bringing the coating agent into contact with the percarbonate comprises distributing an aqueous solution of the coating agent onto the percarbonate particles, for example by spraying. It is particularly desirable for the percarbonate particles to be kept in motion. Thus, a coating process of the present invention can desirably be carried out in a range of apparatuses that can agitate particles, of which practical examples include a fluid bed, a rotating plate, and a rotary mixer into each of which it is convenient to spray the coating agent solution. During the course of the contact, the persalt tends to adsorb, and to some extent absorb the coating agent solution and with subsequent or simultaneous evaporation of the solvent from the coating agent solution, a coating is deposited around the percarbonate core.

It will be recognised that the invention coating process may be conducted in a single pass throught the coating apparatus or in a plurality of passes, at the discretion of the user. A plurality of passes, such as from 2 to 4 passes is particularly beneficial for application of a heavy coating, for example a total coating of around 10% w/w or more, in that it reduces the amount of solvent that need be removed in each pass and thus reduces or removes the risk of over-wetting the percarbonate before it is dried. A continuous or batch method can be used.

Evaporation of solvent from the solution can be carried out at the same time and in the same vessel as spraying. The solvent is normally water alone. The two steps of application of the coating solution and water removal can if desired be carried out sequentially in different pieces of apparatus, which may in some cases be of the same type, eg both in fluidised beds or be of different types, such as the mixing step in a rotary mixer and the evaporation step in a fluidised bed.

An apparatus such as a fluid bed is particularly suitable for carrying out simultaneous spraying and evaporation. In such a case, the temperature of the fluid bed is usually maintained in the range of 30 to 95°C and preferably 60 to 80°C.

One particularly convenient process variation comprises spraying a solution of the invention coating agent in a separate mixer, particularly a rotary mixer, and drying of the wetted percarbonate subsequently in a fluid bed. In this variation, the temperature in the mixer is often selected in the range of 10 to 60°C and preferably 20 to 50°C. Drying in the fluid bed is then conveniently carried out at a temperature of 50 to 90°C and preferably of from 60 to 70°C. The process variation employing a mixer followed by a fluid bed drier is particularly suitable for a multi pass application of coating agent to percarbonate.

The fluid bed employed herein either for a combined coating/drying process or simply in the drying stage can be operated in accordance with known procedures for coating/drying or simply drying persalts, as the case may be. Thus, any non-reactive gas can be used as the fluidising gas, including air in particular. The gas can be pre-dehumidified, if desired, and pre-heated to maintain the temperature of the fluid bed at the desired value. It is also possible to use direct heating means for the fluidised bed, such as a tube bundle placed within the fluid bed or a heated jacket around the bed. The upward airflow of fluidising gas is regulated to maintain the percarbonate particles in an agitated state, ie not settling, but is not so great as to blow the particles, other than fines, out of the fluidising vessel.

The aqueous coating solution is generally brought into contact with the percarbonate particles at a temperature that is within about 30°C of the particles and often within about 5°C of each other.

The proportions of coating agent solution and percarbonate are chosen so as to leave, after drying, the desired weight of coating agent around the percarbonate core. In practice, it is desirable to limit the addition of solution to percarbonate in a fluid bed or mixer to a maximum water content of about 18% w/w so as to minimise or eliminate wetting out problems, more preferably to an amount selected in the range of about 5 to 12% w/w water and often from about 8 to 12% w/w water. It is normally desirable also to continue drying until the coated percarbonate has a moisture content of below about 1% w/w, such as in the region of 0.1 to 0.7% w/w. The duration of the drying stage is usually determined by such practical considerations as, amongst others, the amount of coating agent solution being applied per unit weight of percarbonate, the residual content of moisture that will be tolerated, the temperature and moisture content of the influent fluidising gas, whether additional heating is employed for the bed and the rate at which the gas flows through the bed. It will accordingly vary from apparatus to apparatus and be capable of control by a skilled person in the art of coating persalts with the aid of preliminary ranging trials.

It will naturally be recognised that the final form of a coating agent on percarbonate may change as a result of subsequent reaction or processing. Thus, for example, contact of a solution of an acidic coating agent on the surface or in the surface layer of percarbonate, an alkali, as in the aforementioned British Patent Specification 1 575 792, may result in the interaction of the acid with the alkali, and that the drying stage can release water of hydration from some or all hydrated salts that might be expected to be present at ambient temperature, provided that the drying temperature exceeds the transition temperature for such salts. Accordingly, the present invention includes any coated percarbonate in which the boric acid and/or pH neutral salts have undergone any such processes in situ.

The present invention also relates to washing or bleaching compositions containing particles of coated sodium percarbonate, such as those according to the present invention described hereinabove and/or produced by the process according to the present invention hereinabove.

In many preferred compositions according to the present invention, one or more of the composition components are selected within the following narrower bands:-
- percarbonate: 2 to 40%, particularly 5 to 30%
- surfactant: 2 to 40%, particularly 5 to 25%
- builder: 1 to 60%, particularly 5 to 40%
- diluent: 1 to 70%, particularly 5 to 50%
- additives: 1 to 10% in total.

The surfactants for incorporation in solid compositions of the present invention can be selected from particulate or flaky anionic, cationic, non-ionic, zwitterionic, amphoteric and ampholytic surfactants and can be either natural soaps or synthetic. A number of suitable surfactants are described in chapter 2 of Synthetic Detergents by A Davidsohn and B M Milwidsky (6th edition) published in 1978 by George Godwin Ltd and John Wiley & Sons, incorporated herein by reference. Without limiting to these surfactants, representative sub-classes of anionic surfactants are carboxylic acid soaps, alkyl aryl sulphonates, olefin sulphonates, linear alkane sulphonates, hydroxy-alkane sulphonates, long chain and OXO alcohol sulphates, sulphated glycerides, sulphated ethers, sulpho-succinates,alkane sulphonates, phosphate esters, sucrose esters and anionic fluorosurfactants; representative classes of cationic surfactants include quaternary ammonium or quaternary pyridinium salts containing at least one hydrophobic alkyl or aralkyl group, representative classes of nonionic surfactants include condensates of a long chain alkanol with either polyethylene oxides or with phenols, or condensates of long chain carboxylic acids or amines or amides with polyethylene oxide, and related compounds in which the long chain moiety is condensed with an aliphatic polyol such as sorbitol or condensation products of ethylene and propylene oxides or fatty acid alkanolamides and fatty acid amine oxides; representative classes of amphoteric/zwitterionic surfactants include sulphonium and phophonium surfactants, optionally substituted by an anionic solubilising group. The proportion of surfactant, expressed as a fraction of all the surfactant present is often from 2/10 to 8/10ths anionic, from 0 to 6/10ths nonionic, and from 0 to 3/10ths for the other surfactants.

Detergent builders that are suitable for inclusion in compositions according to the present invention include specifically alkali metal phosphates, particularly tripolyphosphate but also retrapyrophosphate and hexametaphosphate, especially the sodium salt of each, alkali metal, preferably, sodium carbonate, alkali metal, preferably, sodium borates, and siliceous builders including clays like bentonite, zeolites such as X, Y and MAP zeolites (EP-A-0 552 053) and layered silicates such as the product available under the trade designation SKS6. The coatings achievable with the boric acid-containing agents of the present invention render sodium percarbonate that has been so coated at higher levels particularly suited to incorporation in the relative aggressive detergent compositions, ie those containing siliceous builders. Useful detergent compositions can also include organic chelating builders include nirrilotrisodium triacetate (NTA), EDTA, EDTMP and DTPMP. Such chelating builders can be employed in a relatively small amount as an augmenting builder and peroxygen stabiliser, such as of 1 to 10%.

The detergent compositions can also contain diluents, in an amount usually of not more than about 50% w/w. Such diluents include sodium and magnesium sulphate and are less favoured than previously by manufacturers of detergent compositions, who in recent years have promoted concentrated compositions.

Detergent compositions of the present invention can also contain other substances selected for dedicated purposes in detergent compositions, which in some instances are referred to collectively as detergent additives. Among such additives, the following can be mentioned: persalt activators, optical brighteners, foam inhibitors, enzymes, fading inhibitors and anti-redeposition agents, colorants, pH regulators. Such additives for incorporation in persalt-containing detergent compositions have been described in greater detail in Chapter 4 and exemplified in Chapter 7 of the aforementioned work by Davidsohn and Mildwidsky and are well known to skilled practitioners. Thus, for example, the bleach activator is typically a compound which generates a peroxyacid or an anion thereof by reaction with the percarbonate and is employed in a mole ratio of about 4:1 to 1:2 percarbonate:activator for monoactivating activators and proportionately for multiactivating activators. The range of activators a1 to a20 described by Solvay Interox Ltd in EP-A 0 565 017 can be employed herein, including TAED, SNOBS, sodium isononoyloxybenzenesulphonate, TAGU or sugar esters. Another type of activator for washing/bleaching compositions comprises certain transition metal salts and/or complexes, for example certain manganese, cobalt, and titanium complexes, sometimes employed in conjunction with a calcium promoter, as described in European Patent Application-A-0 272 030. Commonly used optical brighteners include stilbene derivatives. Commonly used optical brighteners include stilbene derivatives. Common antiredeposition agents include carboxymethyl cellulose and polyvinyl pyrrolidone.

The washing and/or bleaching compositions can be employed for washing and or bleaching operations, such as for domestic laundry in accordance with currently described operation conditions for persalt containing compositions.

It will be recognised that in the process according to the present invention, the solution of the coating agent mixture is acidic so that the boron species present are not borates. However, should the user so desire, it is possible in a modification to the present invention and in particular to any of the coating agents and coating processes of the present invention hereinbefore described containing the pH neutral alkali metal or ammonium salts to produce related alkaline coating solutions which contain one or more alkali metal borates instead of or in addition to the boric acids. This can achieved, for example by the use of any of the sodium borates or classes of borates that are named or described in USP 4,526,698 to Kuroda et al (Kao Corp) instead of all or part of the boric acid.

Alternatively, the borates in such modified coating solutions and processes can be obtained by wholly or partly neutralising boric acid with an alkali such as an alkali metal hydroxide, carbonate or bicarbonate, conveniently in an amount that is up to equimolar with the boric acid, or even greater than equimolar in order to attain a solution pH of up to about pH11. In a further alternative, the borate can be obtained by mixture of boric acid with an alkali metal phosphate such as Na₃PO₄ or an alkali metal silicate that generate alkaline solutions and which are present in such amounts that the boron species remain soluble. The amounts of such phosphates and/or silicates to employ relative to the boric acid are described in copending British Patent Applications nos 9226797.0 and 9226796.2 respectively, now published as their corresponding International Applications nos WO 94/14701 and WO 94/14702. In silicate-containing coating agent solutions according to the modification of the present invention, the mole ratio of B:Na₂O:SiO₂ is desirably in the range of from 1:0.1 to 2:0.2 to 2.6. Such modified solutions can be employed to coat percarbonate by the methods described herein, including the process conditions and apparatus for boric acid-containing solutions and the resultant coated products correspondingly incorporated in washing and/or bleaching compositions described herein for the incorporation of percarbonate coated using boric acid-containing solutions. The addition of the pH neutral alkali metal salt and in particular an alkali metal chloride eg the Na or K salt to the borate-containing coating solution can beneficially ameliorate a tendency of borate coatings to promote agglomeration of particulate percarbonate. For example, the partial replacement (such as 1/3rd to 2/3rds) in sodium borate/carbonate coating solutions as obtained from boric acid and sodium carbonate mixtures of weight ratios of 1:2 to 2:1 by eg sodium chloride can iinhibit agglomeration.

Certain embodiments of the present invention are described hereinafter in greater detail by way of example only.

### Examples 1-8 and Comparison C1

In each of these Examples, particulate sodium percarbonate (1kg) (commercially available from Solvay Interox under its trade mark OXYPER and having a particle distribution of 30.8 % w/w in the range 250 to 425mm, 37.5% w/w in the range 425 to 600mm, arid 24.3% w/w in the range 600 to 850mm was coated with a coating agent comprising boric acid and at least one pH neutral salt. The coating solutions were obtained by introducing the boric acid and the pH neutral salt(s) simultaneously into demineralised water, whlist stirring, the temperature of which was progressively increased until a clear solution was observed as summarised in Table 1 below. The highest temperature reached was observed in the presence of the highest proportion of chloride salt. The resultant solutions were subsequently permitted to cool towards ambient temperature, with continued stirring and no precipitation was observed. The solutions at both mildly elevated and ambient temperatures had acceptable viscosity for spraying. They ranged from mildly acidic, having a highest measured pH of 5.0 to more strongly acidic at pH 2 to 3.

**Table 1**

| Solution Ref | Water g | H₃BO₃ g | NaCl g | Na₂SO₄ g | strength % w/w |
|---|---|---|---|---|---|
| A | 150 | 20 | 15 | 15 | 25 |
| B | 150 | 10 | 0 | 40 | 25 |
| C | 150 | 10 | 20 | 20 | 25 |
| D | 150 | 10 | 10 | 30 | 25 |
| E | 150 | 10 | 30 | 10 | 25 |
| F | 150 | 20 | 10 | 20 | 25 |
| G | 112 | 10 | 40 | 0 | 30.9 |

The particulate sodium percarbonate, 1kg,was charged into a laboratory scale agitation mixer, a Lodige M5R mixer at ambient temperature, about 22°C, and sprayed with a specified volume of the previously prepared coating solutions, A to G, over a period of 5 minutes. The damp percarbonate solids were then transferred to a laboratory scale fluidised bed drier (available under the trade mark AEROMATIC), fluidised with hot air and heated to a bed temperature of 70°C for about 30 minutes to ensure that the coated percarbonate particles had been dried. The variations are summarised in Table 2 below. The weight of coating solution has been rounded to the nearest g.

The solubility and stability of the products of Examples 1-8 were tested using the procedures outlined below:-The rate of dissolution of the percarbonate was measured by International Standard method ISO 3123-1976. The proportion of percarbonate dissolving after 60 seconds is given.

The suitability of coated percarbonate for bulk storage was tested by measuring its heat output using an LKB isothermal microcalorimeter The suitability of the coated percarbonate for incorporation with other ingredients in a washing or bleaching composition was determined by dry blending the sodium percarbonate particles (90% w/w) with a particulate Zeolite 4A builder (10% w/w), and storing the resultant blend in a glass container under controlled temperature and humidity conditions of 40°C and 80% Relative Humidity. The available oxygen content (Avox) of the blend was measured initially and after 48 hours, and the comparison of the two figure provides the % Avox remaining which demonstrates the storage capability of the percarbonate.

The coated percarbonate was compared with the uncoated feedstock percarbonate (C1).

The results of the tests are also summarised in Table 2 below, in which the figure given for dissolution is taken after 60 seconds, the figure-given for inherent stability, ie LKB emission, was measured at 40°C.

**Table 2**

| Ex. No | Solution Ref | Amount g | Coating Level % w/w | Water added % | Dissol % 15°C | LKB mW/g 16 hr | Avox % left 48 hrs |
|---|---|---|---|---|---|---|---|
| 1 | A | 124 | 3 | 9 | 86 | 4.7 | 98 |
| 2 | B | 124 | 3 | 9 | 86 | 5.4 | 95 |
| 3 | C | 124 | 3 | 9 | 74 | 5.0 | 95 |
| 4 | D | 124 | 3 | 9 | 83 | 5.0 | 91 |
| 5 | E | 124 | 3 | 9 | 86 | 3.8 | 91 |
| 6 | F | 124 | 3 | 9 | 82 | 4.0 | 93 |
| 7 | G | 100 | 3 | 6.7 | 91 | 3.1 | 90 |
| 8 | G | 135 | 4 | 8.9 | 82 | 3.3 | 95 |
| C1 | | | | | 72 | 4.6 | 75 |

From Table 2, it can be seen that coated products according to the present invention had similar or better properties compared with uncoated percarbonate feedstock.

### Examples 9 to 16 and Comparison C2

In these Examples, the procedures for making and testing coated sodium percarbonate products in Examples 1 to 8 was repeated, but employing coating solutions H to L containing potassium salts as summarised in Table 3 and employing a sodium percarbonate feedstock C2 having the distribution of 11.5% w/w in the range 250 to 425mm, 30.1% w/w in the range 425 to 600mm, 45.9% w/w in the range 600 to 850mm and 10.4% in the range 850 to 1000mm. In Examples 14 15 and 16, there was a further variation in that the coating cycle was repeated with the same coating agent solution to provide a double coating level. Process variations and the test results are summarised in Table 4.

**Table 3**

| Solution Ref | Water g | H₃BO₃ g | KCl g | K₂SO₄ g | strength % w/w |
|---|---|---|---|---|---|
| H | 150 | 10 | 40 | 0 | 25 |
| I | 150 | 20 | 30 | 0 | 25 |
| J | 150 | 20 | 0 | 30 | 25 |
| K | 150 | 15 | 0 | 35 | 25 |
| L | 150 | 20 | 15 | 15 | 25 |

**Table 4**

| Ex. No | Solution Ref | Amount g | Coating Level % w/w | Water added % | Dissol % 15°C | LKB mW/g 16 hr | Avox % left 48 hrs |
|---|---|---|---|---|---|---|---|
| 9 | H | 124 | 3 | 9 | 73 | 5.4 | 100 |
| 10 | I | 124 | 3 | 9 | 80 | 5.4 | 87 |
| 11 | J | 124 | 3 | 9 | 86 | 5.0 | 92 |
| 12 | K | 124 | 3 | 9 | 86 | 5.0 | 92 |
| 13 | L | 124 | 3 | 9 | 87 | 4.1 | 99 |
| 14 | I | 124 x 2 | 3 x 2 | 9 x 2 | 81 | 8.2 | 94 |
| 15 | J | 124 x 2 | 3 x 2 | 9 x 2 | 58 | 5.9 | 95 |
| 16 | L | 124 x 2 | 3 x 2 | 9 x 2 | 85 | 5.4 | 85 |
| C2 | | | | | 64 | 3.0 | 69 |

### Examples 17 to 21

In these Examples, the multipass process of Examples 14 to 16 was repeated employing the coating agent solutions M, N and P summarised in Table 5 on feedstock C2, with the variable coating conditions and test results summarised in Table 6. Since the coating levels were higher in these Examples, the dissolution figures quoted for them are after 2 minutes.

**Table 5**

| Solution Ref | Water g | H₃BO₃ g | NaCl g | Na₂SO₄ g | strength % w/w |
|---|---|---|---|---|---|
| M | 150 | 20 | 15 | 15 | 25 |
| N | 150 | 20 | 10 | 20 | 25 |
| P | 112 | 10 | 40 | 0 | 30.9 |

**Table 6**

| Ex. No | Solution Ref | Amount g | Coating Level % w/w | Water added % | Dissol % 15°C | LKB mW/g 16 hr | Avox % left 48 hrs |
|---|---|---|---|---|---|---|---|
| 17 | M | 124 x 2 | 3 x 2 | 9 x 2 | 90 | 4.4 | 99 |
| 18 | N | 124 x 2 | 3 x 2 | 9 x 2 | 96 | 5.6 | 97 |
| 19 | P | 135 x 2 | 4 x 2 | 8.9 x 2 | 97 | 3.6 | 99 |
| 20 | M | 82 x 3 | 2 x 3 | 6 x 3 | 98 | 3.6 | 99 |
| 21 | M | 124 x 3 | 3 x 3 | 9 x 3 | 91 | 3.3 | 98 |

From the foregoing Tables 3 to 6, it can be seen that invention process provides a means to improve the stability of percarbonate.

### Examples 22 to 25

In these Examples, further concentrated solutions were obtained by dissolving boric acid and one or more pH neutral salt in demineralised water at approximately 70°C in the relative weight proportions and overall concentration listed in Table 7 below. Solution U contained 1 % based on the weight of the solution of the sodium salt of polyacrylate having an average molecular weight of about 30000. The solutions were then employed at about 40 to 45°C to coat particulate sodium percarbonate, with subsequent drying, in a manner and apparatus otherwise similar to that described for Example 1, but on a scale of about 100x to provide the weight of coating agent shown in Table 8. The tests on the product were conducted in the same manner as for Example 1.

**Table 7**

| Solution Ref | Water parts | H₃BO₃ parts | NaCl parts | Na₂SO₄ parts | KCl parts | strength % w/w |
|---|---|---|---|---|---|---|
| R | 117 | 10 | 20 | 20 | | 30 |
| S | 93 | 10 | | | 40 | 35 |
| T | 93 | 11 | | 3 | 36 | 35 |
| U* | 117 | 10 | 40 | | | 30 |

**Table 8**

| Ex. No | Solution Ref | Relative Amount % w/w | Coating Level % w/w | Water added % w/w | Dissol of 90% 15°C in secs | LKB mW/g 16 hr |
|---|---|---|---|---|---|---|
| 22 | R | 10 | 3 | 7 | 42 | 5.4 |
| 23 | S | 11.4 | 4 | 7.4 | 60 | 9.7 |
| 24 | T | 11.4 | 4 | 7.4 | 42 | 7.4 |
| 25 | U | 10 | 3 | 7 | 78 | 1.5 |

From Tables 7 and 8, it can be seen that sodium percarbonate with improved stability was obtained with solutions that introduced relatively low amounts of water for subsequent removal. Accordingly, agglomeration of the product was substantially avoided during the coating process.

### Further Stability Trials

The stability of a number of the coated products produced in the preceding Examples was tested in a detergent formulation containing a zeolite 4A as builder. In each of the trials, a composition was prepared by dry blending coated sodium percarbonate or feedstock material 15% w/w with the particulate detergent composition 85% w/w to produce a composition containing about 2% Avox. Several samples of each composition were stored in wax laminated cardboard boxes of about 120 mls capacity, approximately half filled, sealed and housed in an environment maintained at a constant temperature (32°C) and constant relative humidity (80%). The Avox of an individual box of the compositions was measured, after a desired storage period and the result compared with the measurement before storage commenced to show what proportion of Avox and hence of percarbonate remained. The resuits after 2 and 4 weeks storage are given in Table 9 below.

**Table 9**

| Product of | Avox Remaining (%) | |
|---|---|---|
| | after 2 weeks | after 4 weeks |
| Example 1 | 93 | 84 |
| Example 7 | 94 | 74 |
| Example 8 | 94 | 81 |
| Example 9 | 89 | 66 |
| Example 10 | 89 | 76 |
| Example 13 | 89 | 76 |
| C2 | 74 | 50 |

From Table 9, it can be seen that the coated material was significantly more stable than the feedstock percarbonate.

## Claims

1. A process for stabilising a particulate alkali metal percarbonate by coating it with an effective amount of a boric acid-containing coating material in aqueous solution and dewatering the coated percarbonate characterised in that the aqueous solution comprises a boric acid in the presence of a pH-neutral alkali metal or ammonium salt in an amount which enhances the solubility of boric acid expressed in weight/weight of water.

2. Particulate alkali metal percarbonate having enhanced storage stability having a percarbonate core coated with a coating agent based on boric acid obtainable by dissolving the boric acid in an aqueous solution, contacting the aqueous solution with the percarbonate and dewatering the coated percarbonate characterised in that the aqueous solution contains a pH neutral alkali metal or ammonium salt in an amount which enhances the solubility of boric acid expressed in weight/weight of water.

3. A process or product according to claim 1 or 2 characterised in that the alkali metal percarbonate is sodium percarbonate.

4. A process or product according to any preceding claim characterised in that the pH neutral alkali metal salt is a sodium and/or potassium salt.

5. A process or product according to any preceding claim characterised in the pH neutral salt is selected from halide, sulphate and nitrate.

6. A process or product according to claim 5 characterised in that the pH neutral salt comprises sodium and/or potassium chloride and/or sulphate.

7. A process or product according to any preceding claim characterised in that the coating material contains from 10 to 90% w/w boric acid when it is brought into contact with the percarbonate.

8. A process or product according to claim 7, characterised in that the coating material contains from 20 to 50% by weight of boric acid.

9. A process or product according to any of claims 1 or 3 to 8 characterised in that the coating material solution is formed by dissolving boric acid and the pH neutral salt or salts in water at a temperature of from ambient to 70°C.

10. A process according to any of claims 1 or 3 to 9 characterised in that the concentration of coating material in the aqueous solution is at least 15% by weight.

11. A process according to claim 10 characterised in that the concentration of coating material in the aqueous solution is selected in the range of from 20 to 35% w/w.

12. A process or product according to any preceding claim, characterised in that the coating material is used in a quantity corresponding to 0.5 to 20% by weight, based on the weight of the coated alkali metal percarbonate.

13. A process according to any of claims 1 or 3 to 12 characterised in that the coating is carried out by spraying the aqueous solution of the boric acid and pH neutral salt coating agent onto the percarbonate particles.

14. A process according to claim 13 characterised in that the percarbonate particles are agitated in a mixer during coating.

15. A process according to claim 14 characterised in that the percarbonate particles are thereafter dried in a fluid bed.

16. A process according to claim 15 characterised in that the temperature in the mixer is from 10 to 60°C and that the temperature of the fluid bed is from 50 to 90°.

17. A processs according to any of claims 14 to 16 characterised in that the percarbonate is coated in a plurality of passes through a mixer and a separate drier.

18. Washing or bleaching compositions containing at least one washing agent and a coated particulate alkali metal percarbonate according to any of claims 2 to 9 or 12.

## Patentansprüche

1. Verfahren zur Stabilisierung eines teilchenförmigen Alkalimetallpercarbonats dadurch, daß man es mit einer wirksamen Menge eines Borsäure enthaltenden Überzugsmaterials in wäßriger Lösung überzieht und das überzogene Percarbonat entwässert, dadurch gekennzeichnet, daß die wäßrige Lösung eine Borsäure umfaßt in Gegenwart eines pH-neutralen Alkalimetall- oder Ammoniumsalzes in einer Menge, die die Löslichkeit von Borsäure ausgedrückt in Gewicht/Gewicht Wasser erhöht.

2. Teilchenförmiges Alkalimetallpercarbonat mit verbesserter Lagerstabilität mit einem Percarbonatkern, der mit einem Überzugsmittel basierend auf Borsäure überzogen ist, erhältlich durch Auflösen der Borsäure in einer wäßrigen Lösung, Inkontaktbringen der wäßrigen Lösung mit dem Percarbonat und Entwässern des überzogenen Percarbonats, dadurch gekennzeichnet, daß die wäßrige Lösung ein pH-neutrales Alkalimetall- oder Ammoniumsalz in einer Menge enthält, die die Löslichkeit von Borsäure ausgedrückt in Gewicht/Gewicht Wasser erhöht.

3. Verfahren oder Produkt nach Anspruch 1 oder 2, dadurch gekennzeichnet, daß das Alkalimetallpercarbonat Natriumpercarbonat ist.

4. Verfahren oder Produkt nach einem der vorhergehenden Ansprüche, dadurch gekennzeichnet, daß das pH-neutrale Alkalimetallsalz ein Natrium- und/oder Kaliumsalz ist.

5. Verfahren oder Produkt nach einem der vorhergehenden Ansprüche, dadurch gekennzeichnet, daß das pH-neutrale Salz ausgewählt ist aus Halogenid, Sulphat und Nitrat.

6. Verfahren oder Produkt nach Anspruch 5, dadurch gekennzeichnet, daß das pH-neutrale Salz Natrium- und/oder Kaliumchlorid und/oder -sulphat umfaßt.

7. Verfahren oder Produkt nach einem der vorhergehenden Ansprüche, dadurch gekennzeichnet, daß das Überzugsmaterial von 10 bis 90 % Gew./Gew. Borsäure enthält, wenn es mit dem Percarbonat in Kontakt gebracht wird.

8. Verfahren oder Produkt nach Anspruch 7, dadurch gekennzeichnet, daß das Überzugsmaterial von 20 bis 50 Gew.-% Borsäure enthält.

9. Verfahren oder Produkt nach einem der Ansprüche 1 oder 3 bis 8, dadurch gekennzeichnet, daß die Überzugsmateriallösung durch Auflösen von Borsäure und dem pH-neutralen Salz oder Salzen in Wasser bei einer Temperatur von Raumtemperatur bis 70°C gebildet wird.

10. Verfahren nach einem der Ansprüche 1 oder 3 bis 9, dadurch gekennzeichnet, daß die Konzentration von Überzugsmaterial in der wäßrigen Lösung mindestens 15 Gew.-% beträgt.

11. Verfahren nach Anspruch 10, dadurch gekennzeichnet, daß die Konzentration von Überzugsmaterial in der wäßrigen Lösung im Bereich von 20 bis 35 % Gew./Gew. gewählt ist.

12. Verfahren oder Produkt nach einem der vorhergehenden Ansprüche, dadurch gekennzeichnet, daß das Überzugsmaterial in einer Menge entsprechend 0,5 bis 20 Gew.-% basierend auf dem Gewicht des überzogenen Alkalimetallpercarbonats verwendet wird.

13. Verfahren nach einem der Ansprüche 1 oder 3 bis 12, dadurch gekennzeichnet, daß das Überziehen durch Sprühen der wäßrigen Lösung des Überzugsmittels aus Borsäure und pH-neutralem Salz auf die Percarbonatteilchen ausgeführt wird.

14. Verfahren nach Anspruch 13, dadurch gekennzeichnet, daß die Percarbonatteilchen während des Überziehens in einem Mischer bewegt werden.

15. Verfahren nach Anspruch 14, dadurch gekennzeichnet, daß die Percarbonatteilchen danach in einem Wirbelbett getrocknet werden.

16. Verfahren nach Anspruch 15, dadurch gekennzeichnet, daß die Temperatur in dem Mischer von 10 bis 60°C und die Temperatur des Wirbelbetts von 50 bis 90° ist.

17. Verfahren nach einem der Ansprüche 14 bis 16, dadurch gekennzeichnet, daß das Percarbonat in einer Mehrzahl von Durchläufen durch einen Mischer und einen getrennten Trockner überzogen wird.

18. Wasch- oder Bleichmittelzusammensetzungen, enthaltend mindestens ein Waschmittel und ein überzogenes teilchenförmiges Alkalimetallpercarbonat nach einem der Ansprüche 2 bis 9 oder 12.

## Revendications

1. Procédé de stabilisation d'un percarbonate de métal alcalin particulaire par enrobage de celui-ci avec une quantité efficace d'un matériau d'enrobage contenant de l'acide borique en solution aqueuse et par déshydratation du percarbonate enrobé, caractérisé en ce que la solution aqueuse comprend un acide borique en présence d'un sel de métal alcalin ou d'ammonium neutre du point de vue du pH en une quantité qui augmente la solubilité de l'acide borique, exprimée en poids/poids d'eau.

2. Percarbonate de métal alcalin particulaire présentant une stabilité améliorée au stockage présentant un noyau de percarbonate enrobé d'un agent d'enrobage à base d'acide borique, qui peut être obtenu par dissolution de l'acide borique dans une solution aqueuse, par contact de la solution aqueuse avec le percarbonate et par déshydratation du percarbonate enrobé, caractérisé en ce que la solution aqueuse contient un sel de métal alcalin ou d'ammonium neutre du point de vue du pH en une quantité qui augmente la solubilité de l'acide borique, exprimée en poids/poids d'eau.

3. Procédé ou produit selon la revendication 1 ou 2, caractérisé en ce que le percarbonate de métal alcalin est le percarbonate de sodium.

4. Procédé ou produit selon l'une quelconque des revendications précédentes, caractérisé en ce que le sel de métal alcalin neutre du point de vue du pH est un sel de sodium et/ou de potassium.

5. Procédé ou produit selon l'une quelconque des revendications précédentes, caractérisé en ce que le sel neutre du point de vue du pH est choisi parmi un halogénure, un sulfate et un nitrate.

6. Procédé ou produit selon la revendication 5, caractérisé en ce que le sel neutre du point de vue du pH comprend du chlorure et/ou du sulfate de sodium et/ou de potassium.

7. Procédé ou produit selon l'une quelconque des revendications précédentes, caractérisé en ce que le matériau d'enrobage contient de 10 à 90 % w/w d'acide borique, lorsqu'il est mis en contact avec le percarbonate.

8. Procédé ou produit selon la revendication 7, caractérisé en ce que le matériau d'enrobage contient de 20 à 50 % en poids d'acide borique.

9. Procédé ou produit selon l'une quelconque des revendications 1 ou 3 à 8, caractérisé en ce que la solution de matériau d'enrobage est formée par dissolution d'acide borique et du sel ou des sels neutre(s) du point de vue du pH dans l'eau à une température allant de la température ambiante à 70 °C

10. Procédé selon l'une quelconque des revendications 1 ou 3 à 9, caractérisé en ce que la concentration du matériau d'enrobage dans la solution aqueuse représente au moins 15 % en poids.

11. Procédé selon la revendication 10, caractérisé en ce que la concentration du matériau d'enrobage dans la solution aqueuse est choisie dans la gamme de 20 à 35 % w/w.

12. Procédé ou produit selon l'une quelconque des revendications précédentes, caractérisé en ce que le matériau d'enrobage est utilisé en une quantité correspondant à 0,5 à 20 % en poids sur base du poids du percarbonate de métal alcalin enrobé.

13. Procédé selon l'une quelconque des revendications 1 ou 3 à 12, caractérisé en ce que l'enrobage est effectué par pulvérisation de la solution aqueuse de l'agent d'enrobage d'acide borique et de sel neutre du point de vue du pH sur les particules de percarbonate.

14. Procédé selon la revendication 13, caractérisé en ce que les particules de percarbonate sont agitées dans un mélangeur pendant l'enrobage.

15. Procédé selon la revendication 14, caractérisé en ce que les particules de percarbonate sont ensuite séchées dans un lit fluidisé.

16. Procédé selon la revendication 15, caractérisé en ce que la température dans le mélangeur va de 10 à 60 °C et en ce que la température du lit fluidisé va de 50 à 90 °C.

17. Procédé selon l'une quelconque des revendications 14 à 16, caractérisé en ce que le percarbonate est enrobé en une pluralité de passages par un mélangeur et un sécheur séparé.

18. Composition de lavage ou de blanchiment contenant au moins un agent de lavage et un percarbonate de métal alcalin particulaire enrobé selon l'une quelconque des revendications 2 à 9 ou 12.
